# EUROPÄISCHE PATENTSCHRIFT

(11) **EP 2 619 141 B1**
(45) Veröffentlichungstag und Bekanntmachung des Hinweises auf die Patenterteilung: **16.07.2014**
(21) Anmeldenummer: 11752562.6
(22) Anmeldetag: 09.09.2011
(51) Int. Cl.: C01G 53/00, H01M 4/485, H01M 4/505, H01M 4/525

(54) **VERFAHREN ZUR HERSTELLUNG VON MODIFIZIERTEN ÜBERGANGSMETALLMISCHOXIDEN**
PROCESS FOR PREPARING MODIFIED TRANSITION METAL MIXED OXIDES
PROCÉDÉ DE PRODUCTION D'OXYDES MIXTES DE MÉTAUX DE TRANSITION MODIFIÉS

(30) Priorität: 21.09.2010 EP 10177810; 21.09.2010 US 384722 P
(43) Veröffentlichungstag der Anmeldung: 31.07.2013
(73) Patentinhaber: BASF SE, 67056 Ludwigshafen (DE)
(72) Erfinder: SCHULZ-DOBRICK, Martin, 68165 Mannheim (DE); EWALD, Bastian, 67061 Ludwigshafen (DE); LAMPERT, Jordan Keith, 67063 Ludwigshafen (DE)
(86) Internationale Anmeldenummer: PCT/EP2011/065597
(87) Internationale Veröffentlichungsnummer: WO 2012/038270

(56) Entgegenhaltungen:
- WO-A1-2012/038269
- US-A1- 2002 110 736
- US-A1- 2008 118 428
- US-A1- 2009 286 157

## Beschreibung

Die vorliegende Erfindung betrifft ein Verfahren zur Herstellung von modifizierten Übergangsmetallmischoxiden, das dadurch gekennzeichnet ist, dass man eine Vorstufe eines Übergangsmetallmischoxids, das Lithium und mindestens zwei Übergangsmetalle als Kationen enthält, mit mindestens einem Stoff behandelt, der gewählt wird aus Verbindungen von Phosphor, Silizium, Titan, Bor oder Aluminium mit mindestens einer Phenoxy-, Alkoxygruppe oder mindestens einem Halogen.

Um die Energiedichte der in der Regel recht schweren elektrochemischen Zellen, die auf derartigen Elektroden basieren, zu verbessern, werden stets verbesserte Elektrodenmaterialien mit verbessertem Auflade/Entladeverhalten gesucht. Auf der Suche nach vorteilhaften Elektrodenmaterialien für Batterien, die als leitfähige Spezies Lithium-Ionen nutzen, wurden bisher zahlreiche Materialien vorgeschlagen, beispielsweise Lithium-haltige Spinelle, Mischoxide wie beispielsweise lithiierte Nickel-Mangan-Cobalt-Oxide und Lithium-Eisen-Phosphate. Besondere Aufmerksamkeit wird den Lithiumkationen-haltigen Mischoxiden gewidmet.

Die Herstellung von Lithiumkationen-haltigen Mischoxiden ist dem Grunde nach bekannt. Man stellt zunächst eine sogenannte Vorstufe, englisch "precursor", bereit, indem man beispielsweise Oxide, Hydroxide, Carbonate oder ähnliche Salze von Übergangsmetallen herstellt und miteinander vermischt, beispielsweise miteinander vermahlt oder durch Copräzipitation gleich in einem Schritt herstellt, siehe beispielsweise EP 1 189 296 A und EP 1 296 391 A. Anschließend vermischt man mit einer Lithiumverbindung, vorzugsweise mit Li₂O, LiOH oder Li₂CO₃, und setzt anschließend bei hoher Temperatur um, beispielsweise bei 800 bis 1000°C. Man erhält ein Übergangsmetallmischoxid, das man mit Kohlenstoff in elektrisch leitfähiger Modifikation und gegebenenfalls mit einem oder mehreren Bindemitteln versetzt.

US 2008/118428 A1 offenbart ein Verfahren zur Herstellung von modifizierten Übergangsmetallmischoxiden, wobei eine Mischung enthaltend Trikobalttetroxid, Titanoxid und Lithiumcarbonat mit Aluminiumtrifluorid behandelt wird. Diese Mischung enthält 0,41 Gew.-% Aluminium. Das erhaltene Übergansmetallmischoxid wird zu einer Elektrode weiterverarbeitet.

In US 2009/0286157 wird ein Verfahren zur Oberflächenmodifizierung von Elektroden für Lithium-Ionen-Batterien vorgeschlagen, durch das die Gasentwicklung beim Betreiben einer Lithium-lonen-Batterie verringert werden kann. Das Verfahren zur Oberflächenmodifizierung beruht darauf, dass man Elektrodenmaterialien mit Silanen oder Organometallverbindungen umsetzt.

Jedoch gibt es auch Elektrodenmaterialien, die ein verbesserungswürdiges Auflade/Entladeverhalten zeigen, obwohl sie keine Gasentwicklung beim Betreiben beobachten lassen,

Es bestand also die Aufgabe, ein Verfahren zur Herstellung von elektrochemischen Zellen bereit zu stellen, die ein gegenüber dem Stand der Technik verbessertes Auflade/Entladeverhalten zeigen und aus leicht zugänglichen Materialien herstellbar sind.

Dementsprechend wurde das eingangs definierte Verfahren gefunden, kurz auch "erfindungsgemäßes Verfahren" genannt.

Das erfindungsgemäße Verfahren geht aus von einer Vorstufe eines Mischoxids, das Lithium und mindestens zwei Übergangsmetalle als Kationen enthält. Darunter ist im Rahmen der vorliegenden Erfindung die Vorstufe von einem Mischoxid zu verstehen, das Lithium und mindestens zwei Übergangsmetalle als Kationen enthält, und wird kurz Vorstufe genannt. Die Vorstufe selber enthält keine Lithiumkationen.

Bevorzugt enthält die Vorstufe mindestens zwei Übergangsmetalle als Kationen, in besonderen Ausführungsformen drei oder vier verschiedene Übergangsmetalle.

Als Anionen sind beispielsweise Oxidionen, Hydroxidionen, Carbonationen sowie Kombinationen der vorstehend genannten Anionen zu nennen.

Viele Elemente sind ubiquitär. In gewissen sehr kleinen Anteilen sind beispielsweise Natrium, Kalium und Chlorid in praktisch wie allen anorganischen Materialien nachzuweisen. Im Rahmen der vorliegenden Erfindung werden Anteile von weniger als 0,1 Gew.-% von Kationen oder Anionen vernachlässigt. Eine Vorstufe, welche weniger als 0,1 Gew.-% Natrium enthält, gilt im Rahmen der vorliegenden Erfindung also als Natrium-frei. Dementsprechend gilt eine Vorstufe, die weniger als 0,1 Gew.-% Sulfationen enthält, im Rahmen der vorliegenden Erfindung als Sulfat-frei.

In einer Ausführungsform der vorliegenden Erfindung enthält die Vorstufe im Bereich von 0,1 bis 1 Gew.% Alkalimetallionen, die von Lithiumionen verschieden sind, insbesondere Natriumionen. Bevorzugt ist jedoch der Einsatz von Vorstufen, die keine von Lithiumkatonen verschiedenen Alkalimetaltionen aufweisen.

In einer Ausführungsform der vorliegenden Erfindung enthält die Vorstufe im Bereich von 0,1 bis 2 Gew.-% Sulfationen, oder Nitrationen oder Acetationen. Bevorzugt ist jedoch der Einsatz von Vorstufen, die frei sind von Sulfationen, Nitrationen und Acetationen.

In einer Ausführungsform der vorliegenden Erfindung enthält die Vorstufe im Bereich von 0,1 bis 5 Gew.-% Fluoridionen. In einer anderen Ausführungsform der vorliegenden Erfindung ist die Vorstufe Fluoridionen-frei.

In einer Ausführungsform der vorliegenden Erfindung enthält die Vorstufe im Bereich von 0,1 bis 2 Gew.-% Halogenidionen, die von Fluorid verschieden sind, insbesondere Chlorid. Bevorzugt ist der Einsatz von Vorstufen, die frei sind von Halogenidionen, die von Fluorid verschieden sind.

In einer Ausführungsform der vorliegenden Erfindung wählt man als Vorstufe eines Mischoxids mindestens ein Hydroxid, Phosphat, Oxyhydroxid oder Carbonat. Bevorzugt wählt man als Vorstufe eines Mischoxids eine Mischung von Hydroxiden, Phosphaten, Carbonaten, Oxyhydroxiden oder Oxiden von mindestens zwei der Elemente Nickel, Kobalt, Titan, Vanadium, Chrom, Mangan und Eisen.

In der vorliegenden Erfindung sind Übergangsmetalle gewählt aus Kombinationen von mindestens zwei der Elemente Nickel, Kobalt, Titan, Vanadium, Chrom, Mangan und Eisen, bevorzugt aus Kombinationen von mindestens drei der vorstehend genannten Übergangsmetalle, besonders bevorzugt sind Kombinationen von Nickel und Mangan und mindestens einem weiteren der vorstehend genannten Übergangsmetalle, besonders bevorzugt sind Kombinationen von Nickel, Mangan und Kobalt.

Dabei sind beliebige Mengeverhältnisse möglich. So kann man Nickel, Kobalt und Mangan beispielsweise in molaren Verhältnissen wie 1 : 1 : 1 wählen oder wie 5 : 2 : 3 oder wie 4 : 2 : 4 oder wie 22: 12 : 66 oder wie 1 : 0 : 3 oder wie 5 : 1 : 4.

In einer Ausführungsform der vorliegenden Erfindung sind bis zu 10 Gew.-%, bevorzugt bis zu 1 Gew.-% von Übergangsmetall ersetzt durch Mg²⁺, Ca²⁺ oder Al³⁺. In einer anderen Ausführungsform ist Vorstufe frei von Mg²⁺, Ca²⁺ und Al³⁺.

Vorzugsweise enthält Vorstufe im Rahmen der vorliegenden Erfindung Wasser in physisorbierter oder chemisch gebundener Form, beispielsweise im Bereich von 0,1 bis 10 Gew.-%, bevorzugt bis zu 2 Gew.-%. Dabei ist eine exakte Unterscheidung zwischen physisorbiertem und chemisch gebundenem Wasser in vielen Fällen nicht einfach, so dass es sinnvoll ist, allgemein von Wassergehalt zu sprechen.

Erfindungsgemäß behandelt man Vorstufe mit mindestens einem Stoff, der gewählt wird aus Verbindungen von Phosphor, Silizium, Bor, Titan oder Aluminium mit mindestens einer Alkoxygruppe oder mindestens einem Halogen pro Mol. Dabei sind Stoffe gewählt aus solchen Stoffen, die bei der Durchführung der erfindungsgemäßen Behandlung gasförmig oder flüssig sind oder in organischem Lösungsmittel zu mindestens einem Gramm/Liter gelöst werden können.

In einer Ausführungsform der vorliegenden Erfindung führt man das erfindungsgemäße Verfahren so durch, dass man Stoff, der gewählt wird aus Verbindungen von Phosphor, Silizium, Bor, Titan oder Aluminium mit mindestens einer Alkoxygruppe oder mindestens einem Halogen pro Mol in gasförmiger Form einsetzt.

In einer Ausführungsform der vorliegenden Erfindung führt man das erfindungsgemäße Verfahren so durch, dass man Stoff, der gewählt wird aus Verbindungen von Phosphor, Silizium, Bor, Titan oder Aluminium mit mindestens einer Alkoxygruppe oder mindestens einem Halogen pro Mol in flüssiger Form einsetzt, und zwar in Substanz.

In einer anderen Ausführungsform der vorliegenden Erfindung führt man das erfindungsgemäße Verfahren so durch, dass man eine Lösung von Stoff, der gewählt wird aus Verbindungen von Phosphor, Silizium, Bor, Titan oder Aluminium mit mindestens einer Alkoxygruppe oder mindestens einem Halogen pro Mol, einsetzt, wobei man das oder die Lösungsmittel wählt aus organischen Lösungsmitteln.

In einer Ausführungsform der vorliegenden Erfindung behandelt man mit mindestens einer Verbindung von Bor mit mindestens einer Alkoxygruppe oder mindestens einem Halogen pro Mol, im Rahmen der vorliegenden Erfindung auch kurz Verbindung von Bor oder Borverbindung genannt.

In einer Ausführungsform der vorliegenden Erfindung wählt man Verbindungen von Bor aus Verbindungen der Formel B(X¹)ₐ(R²)₃₋ₐ, wobei die Variablen wie folgt definiert sind:
- X¹: kann verschieden sein oder gleich und wird gewählt aus Halogen, Phenoxygruppen und Alkoxygruppen, insbesondere der Formel OR¹,
- R¹: ist gewählt aus Phenyl und vorzugsweise C₁-C₆-Alkyl, cyclisch oder linear, beispielsweise Methyl, Ethyl, n-Propyl, iso-Propyl, n-Butyl, iso-Butyl, sec.-Butyl, tert.-Butyl, n-Pentyl, Cyclopentyl, iso-Amyl, iso-Pentyl, n-Hexyl, iso-Hexyl, Cyclohexyl, und 1,-3-Dimethylbutyl, bevorzugt n-C₁-C₆-Alkyl, besonders bevorzugt Methyl, Ethyl, n-Propyl, iso-Propyl und ganz besonders bevorzugt Methyl oder Ethyl. Wenn ein Stoff mehrere Alkoxygruppen pro Mol aufweist, so kann R¹ verschieden sein oder vorzugsweise gleich und gewählt aus den vorstehend genannten C₁-C₆-Alkylresten.
- R²: ist gewählt aus Phenyl und vorzugsweise C₁-C₆-Alkyl, beispielsweise Methyl, Ethyl, n-Propyl, iso-Propyl, n-Butyl, iso-Butyl, sec.-Butyl, tert.-Butyl, n-Pentyl, iso-Amyl, iso-Pentyl, n-Hexyl, iso-Hexyl und 1,-3-Dimethylbutyl, bevorzugt n-C₁-C₆-Alkyl, besonders bevorzugt Methyl, Ethyl, n-Propyl, iso-Propyl und ganz besonders bevorzugt Methyl oder Ethyl.

Halogen kann im Rahmen der vorliegenden Erfindung auch als X² abgekürzt werden und ist gewählt aus Iod, Brom, bevorzugt Chlor und besonders bevorzugt Fluor.
- a: ist eine Zahl im Bereich von eins bis drei.

Beispiele für bevorzugte Borverbindungen sind C₆H₅-B(X²)₂, insbesondere C₆H₅-BCl₂, C₆H₅-BF₂, cyclo-C₆H₁₁BCl₂, cyclo-C₆H₁₁BF₂, BCl₃, B(CH₃)₃, B(C₂H₅)₃, B(CH₃)₂F, B(CH₃)₂Cl, B(C₂H₅)₂F, B(C₂H₅)₂Cl, CH₃-BF₂, CH₃-BCl₂, C₂H₅-BF₂, iSO-C₃H₇-BCl₂, iso-C₃H₇-BF₂, C₂H₅-BCl₂, CH₃O-B(CH₃)₂, C₂H₅O-B(CH₃)₂, CH₃O-B(C₂H₅)₂, C₂H₅O-B(C₂H₅)₂Cl, B(OC₂H₅)₃, B(OCH₃)₃, B(OC₂H₅)₃, B(iso-OC₃H₇)₃, BF₃.

Besonders bevorzugte Borverbindungen sind B(OCH₃)₃ und BF₃.

In einer Ausführungsform der vorliegenden Erfindung wählt man Verbindungen von Aluminium aus Al(CH₃)₃, AlF₃, AlCl₃, AlBr₃, Al(OCH₃)₃, Al(C₂H₅)₃, Al(OC₂H₅)₃, Al(*iso*-OC₃H₇)₃ und Methylalumoxan (MAO).

In einer Ausführungsform der vorliegenden Erfindung behandelt man mit AlF₃, welches man während der erfindungsgemäßen Behandlung *in situ* erzeugt, beispielsweise aus Ammoniumfluorid und Aluminiumnitrat.

In einer Ausführungsform der vorliegenden Erfindung behandelt man mit mindestens einer Verbindung von Titan mit mindestens einer Alkoxygruppe oder mindestens einem Halogen pro Mol, im Rahmen der vorliegenden Erfindung auch kurz Verbindung von Titan genannt.

In einer Ausführungsform der vorliegenden Erfindung wählt man Verbindungen von Titan aus solchen mit Titan in der Oxidationsstufe +4. Bevorzugt sind Verbindungen der Formel Ti(R²)ₘ(X¹)₄₋ₘ, wobei die Variablen wie folgt definiert sind:
- R²: sind gleich oder verschieden und gewählt aus Phenyl und C₁-C₆-Alkyl, cyclisch oder linear, wie vorstehend definiert,
- X¹: sind gleich oder verschieden und gewählt aus Fluor, Chlor, Brom, Iod, Phenoxy und O-C₁-C₆-Alkyl, wie vorstehend definiert,
- m: ist eine Zahl im Bereich von null bis drei, bevorzugt null bis zwei und insbesondere null.

Beispiele für besonders geeignete Verbindungen von Titan sind TiCl₄, TiBr₄, Ti(OCH₃)₄, Ti(OC₂H₅)₄ und Ti(OC₂H₅)₂(iso-C₃H₇)₂.

In einer Ausführungsform der vorliegenden Erfindung behandelt man mit mindestens einer Verbindung von Silizium mit mindestens einer Alkoxygruppe oder mindestens einem Halogen pro Mol, im Rahmen der vorliegenden Erfindung auch kurz Verbindung von Silizium genannt.

In einer Ausführungsform der vorliegenden Erfindung wählt man Verbindungen von Silizium aus Verbindungen der Formel Si(R²)ₘ(X¹)₄₋ₘ, wobei die Variablen wie folgt definiert sind:
- R²: sind gleich oder verschieden und gewählt aus Phenyl und C₁-C₆-Alkyl, cyclisch oder linear, wie vorstehend definiert,
- X¹: sind gleich oder verschieden und gewählt aus Fluor, Chlor, Brom, Iod und O-C₁-C₆-Alkyl, wie vorstehend definiert,
- m: ist eine Zahl im Bereich von null bis vier, bevorzugt null bis zwei und insbesondere null.

Beispiele für besonders geeignete Verbindungen von Silizium sind SiCl₄, SiBr₄, Si(OCH₃)₄, Si(OC₂H₅)₄, Si(OC₂H₅)₂(*iso*-C₃H₇)₂, CH₃SiCl₃, (CH₃)₂SiCl₂, (CH₃)₃SiCl, CH₃Si(OCH₃)₃, (CH₃)₂Si(OCH₃)₂, (CH₃)₃Si-OCH₃, C₆H₅SiCl₃ und C₆H₅(CH₃)₂SiCl.

In einer Ausführungsform der vorliegenden Erfindung behandelt man mit mindestens einer Verbindung von Phosphor mit mindestens einer Alkoxygruppe oder mindestens einem Halogen pro Mol, im Rahmen der vorliegenden Erfindung auch kurz Verbindung von Phosphor genannt.

In einer Ausführungsform der vorliegenden Erfindung wählt man Verbindungen von Phosphor aus Verbindungen der Formeln O=P(X¹)₃, O=P(OH)(OR³)₂, O=P(OH)₂(OR³), O=PR⁵(OH)(OR³), O=P(R⁵)₂(OR³), O=P(R⁵)₂(OH), O=P(R⁵)₃, P(X¹)₃, P(OH)(OR³)₂, P(OH)₂(OR³), PR⁵(OR³)₂, PR⁵(OH)(OR³), P(R⁵)₂(OH) und P(R³)₃.

In einer Ausführungsform der vorliegenden Erfindung wählt man Verbindung von Phosphor aus Dialkylalkylphosphonaten der allgemeinen Formel R⁵-P(O)(OR¹)₂, in anderer Schreibweise O=PR⁵(OR¹)₂, oder Dialkylalkylphosphonaten der Formel R⁵-P(O)(OR³)(OR⁴), wobei die Variablen wie folgt definiert sind:
- R³, R⁴:: sind jeweils gleich oder verschieden und gewählt aus Wasserstoff, Phenyl und C₁-C₄-Alkyl,
- R⁵: gewählt aus Wasserstoff, Phenyl, C₃-C₇-Cycloalkyl und C₁-C₆-Alkyl. Falls möglich, sind R⁵ verschieden oder vorzugsweise gleich.

An Stelle von Verbindungen mit R³ oder R⁴ gleich Wasserstoff kann man auch ein oder mehrere korrespondierende Salze einsetzen, beispielsweise Alkalimetallsalze oder Ammoniumsalze. Als Alkalimetallsalze sind Kaliumsalze und insbesondere Natriumsalze zu nennen. Als Ammoniumsalze sind Salze von geeigneten Aminen zu nennen wie beispielsweise von C₁-C₄-Alkylamin, Di-C₁-C₄-Alkylamin und Tri-C₁-C₄-Alkylamin, wobei Alkylgruppen in Di-C₁-C₄-Alkylaminen und Tri-C₁-C₄-Alkylaminen verschieden oder vorzugsweise gleich sein können. Geeignet sind weiterhin Salze von Alkanolamin, insbesondere Ethanolamin, beispielsweise Ethanolamin, N,N-Diethanolamin, N,N,N-Triethanolamin, N-Methylethanolamin, N,N-Dimethylethanolamin, N-Methyldiethanolamin und N-n-Butylethanolamin.

Das erfindungsgemäße Verfahren kann man in der Gasphase oder in flüssiger (kondensierter) Phase durchführen. Unter einer Behandlung in der Gasphase ist zu verstehen, dass die Phosphorverbindung(en), Siliziumverbindung(en), Titanverbindung(en), Borverbindung(en) bzw. Aluminiumverbindung(en) überwiegend, d. h. zu mindestens 50 mol-%, in gasförmigem Zustand vorliegen. Die Vorstufe(n) liegen bei der Durchführung des erfindungsgemäßen Verfahrens selbstverständlich nicht in der Gasphase vor.

Unter einer Behandlung in flüssiger Phase ist zu verstehen, dass man die Phosphorverbindung(en), Siliziumverbindung(en), Titanverbindung(en), Borverbindung(en) bzw. Aluminiumverbindung(en) in gelöster, emulgierter oder suspendierter Form oder, falls sie bei der Behandlungstemperatur flüssig sind, in Substanz einsetzt. Die Vorstufe(n) liegt bzw. liegen bei der Durchführung des erfindungsgemäßen Verfahrens in fester Form vor.

In einer Ausführungsform der vorliegenden Erfindung behandelt man Vorstufe mit Phosphorverbindung(en), Siliziumverbindung(en), Titanverbindung(en), Borverbindung(en) bzw. Aluminiumverbindung(en) bei Temperaturen im Bereich von -20 bis +1000°C, bevorzugt +20 bis +900°C.

In einer Ausführungsform der vorliegenden Erfindung behandelt man Vorstufe mit Phosphorverbindung(en), Siliziumverbindung(en), Titanverbindung(en), Borverbindung(en) bzw. Aluminiumverbindung(en) in Gegenwart eines Lösungs- oder Dispergiermittels. Geeignete Lösungsmittel sind beispielsweise aliphatische oder aromatische Kohlenwasserstoffe, organische Carbonate, weiterhin Ether, Acetale, Ketale und nicht-protische Amide, Ketone und Alkohole. Beispielhaft seien aufgeführt: n-Heptan, n-Dekan, Decahydronaphthalin, Cyclohexan, Toluol, Ethylbenzol, ortho-, meta- und para-Xylol, Dimethylcarbonat, Diethylcarbonat, Methylethylcarbonat, E-thylencarbonat, Propylencarbonat, Diethylether, Diisopropylether, Di-n-Butylether, Methyl-tert.-butylether, 1,2-Dimethoxyethan, 1,1-Dimethoxyethan, 1,2-Diethoxyethan, 1,1-Diethoxyethan, Tetrahydrofuran (THF), 1,4-Dioxan, 1,3-Dioxolan, N,N-Dimethylformamid, N,N-Dimethylacetamid und N-Methylpyrrolidon, Aceton, Metylethylketon, Cyclohexanon, Methanol, Ethanol und Isopropanol.

In einer Ausführungsform der vorliegenden Erfindung setzt man Phosphorverbindung, Siliziumverbindung, Titanverbindung, Borverbindung bzw. Aluminiumverbindung in gasförmiger Form ein, beispielsweise in Reinform oder mit einem Trägergas. Als Trägergase sind beispielsweise Stickstoff, Edelgase wie beispielsweise Argon und weiterhin Sauerstoff oder Luft geeignet.

In einer Ausführungsform der vorliegenden Erfindung arbeitet man mit 1 bis 99 Vol.-% Trägergas und 99 bis 1 Vol.-% gasförmiger Phosphorverbindung, Siliziumverbindung, Titanverbindung, Borverbindung bzw. Aluminiumverbindung, bevorzugt mit 5 bis 95 Vol.-% Trägergas und 95 bis 5 Vol.-% gasförmiger Phosphorverbindung, Siliziumverbindung, Titanverbindung, Borverbindung bzw. Aluminiumverbindung.

In einer Ausführungsform der vorliegenden Erfindung führt man das erfindungsgemäße Verfahren bei Normaldruck durch.

In einer anderen Ausführungsform der vorliegenden Erfindung führt man das erfindungsgemäße Verfahren bei erhöhtem Druck durch, beispielsweise bei 1,1 bis 20 bar.

In einer anderen Ausführungsform der vorliegenden Erfindung führt man das erfindungsgemäße Verfahren bei vermindertem Druck durch, beispielsweise bei 0,5 bis 900 mbar, insbesondere bei 5 bis 500 mbar.

In einer Ausführungsform der vorliegenden Erfindung kann man das erfindungsgemäße Verfahren über einen Zeitraum im Bereich von 1 Minute bis zu 24 Stunden, bevorzugt im Bereich von 10 Minuten bis 3 Stunden durchführen.

In einer Ausführungsform der vorliegenden Erfindung wählt man ein Gewichtsverhältnis von Mischoxid zu Phosphorverbindung, Siliziumverbindung, Titanverbindung, Borverbindung bzw. Aluminiumverbindung im Verhältnis 0,01 zu 1 bis 1000 zu 1.

In einer Ausführungsform der vorliegenden Erfindung behandelt man Vorstufe mit einer Phosphorverbindung, Siliziumverbindung, Titanverbindung, Borverbindung bzw. Aluminiumverbindung.

Natürlich kann man erfindungsgemäß nicht nur eine Vorstufe behandeln, sondern auch Gemische von zwei oder mehr Vorstufen.

In der vorliegenden Erfindung führt man die erfindungsgemäße Behandlung von Vorstufe mit Phosphorverbindung, Siliziumverbindung, Titanverbindung, Borverbindung bzw. Aluminiumverbindung in Abwesenheit von Lithiumverbindungen durch. Nach Abschluss der Behandlung von Vorstufe mit Phosphorverbindung, Siliziumverbindung, Titanverbindung, Borverbindung bzw. Aluminiumverbindung setzt man dann mit mindestens einer Lithiumverbindung, vorzugsweise mit mindestens einem Lithiumsalz um. Bevorzugte Lithiumverbindungen sind gewählt aus LiOH, Li₂O, LiNO₃ und Li₂CO₃.

Je nach gewünschter Behandlungstemperatur kann man das oder die Gefäße, in dem oder in denen man die erfindungsgemäße Behandlung durchführen will, wählen. So kann man beispielsweise Kessel oder Rührkolben wählen, wenn man die Temperatur bei maximal 300°C halten möchte. Wenn man die Temperatur zur Durchführung des erfindungsgemäßen Verfahrens zumindest zeitweise oberhalb von 300°C halten möchte, so ist es bevorzugt, als Gefäß einen Ofen zu wählen, beispielsweise einen Drehrohrofen, einen Durchschiebeofen, einen Muffelofen oder ein Pendelrohrofen (englisch pendulum kiln).

Natürlich ist es auch möglich, eine Kombination von zwei oder mehr Reaktionsgefäßen zu wählen, beispielsweise eine Kaskade aus einem Rührkessel und einem Drehrohrofen.

Bei der erfindungsgemäßen Behandlung von Vorstufe mit Phosphorverbindung, Siliziumverbindung, Titanverbindung, Borverbindung bzw. Aluminiumverbindung können unter den Reaktionsbedingungen gasförmige Nebenprodukte frei werden, beispielsweise Alkohole R¹-OH oder Halogenwasserstoffe, insbesondere HCl oder HBr. Derartige Nebenprodukte kann man leicht von Übergangsmetallmischoxid abtrennen.

In einer Variante der vorliegenden Erfindung entsteht bei der erfindungsgemäßen Behandlung von Vorstufe mit Phosphorverbindung, Siliziumverbindung, Titanverbindung, Borverbindung bzw. Aluminiumverbindung HF. In solchen Fällen kann F in das Kristallgitter von Mischoxid eingebaut werden.

Wenn man die Behandlung von Vorstufe mit Phosphorverbindung, Siliziumverbindung, Titanverbindung, Borverbindung bzw. Aluminiumverbindung in der Gasphase durchgeführt hat, so kann man beispielsweise nicht umgesetzte Phosphorverbindung, Siliziumverbindung, Titanverbindung, Borverbindung bzw. Aluminiumverbindung und eventuelle Nebenprodukte durch Ausspülen mit reinem Inertgas, durch Evakuieren oder durch Ausheizen, gegebenenfalls bei vermindertem Druck, abtrennen.

Wenn man die Behandlung von Vorstufe mit Phosphorverbindung, Siliziumverbindung, Titanverbindung, Borverbindung bzw. Aluminiumverbindung in flüssiger Phase in Gegenwart von Lösungsmittel durchgeführt hat, so kann man beispielsweise nicht umgesetzte Phosphorverbindung, Siliziumverbindung, Titanverbindung, Borverbindung bzw. Aluminiumverbindung und Lösungsmittel durch Filtration, Auswaschen, Abdestillieren von Lösungsmittel, Verdampfen von Borverbindung und/oder Lösungsmittel oder Extraktion oder durch eine Kombination von einer oder mehreren der vorstehend genannten Maßnahmen abtrennen.

Anschließend kann man erfindungsgemäß behandelte Vorstufe thermisch nachbehandeln, beispielsweise bei 100°C bis 1000°C, bevorzugt 200°C bis 600°C. Eine thermische Nachbehandlung kann man unter Luft oder inertem Trägergas durchführen.

In einer Ausführungsform der vorliegenden Erfindung wählt man für die thermische Nachbehandlung einen Pendelofen, einen Durchschiebeofen oder einen Drehrohrofen.

In einer Ausführungsform der vorliegenden Erfindung führt man die thermische Nachbehandlung über einen Zeitraum im Bereich von einer Minute bis 24 Stunden, bevorzugt 30 Minuten bis 4 Stunden durch.

In einer Ausführungsform der vorliegenden Erfindung geht man so vor, dass man Vorstufe in einem Gemisch mit mindestens einem weiteren Bestandteil von Elektroden gemeinsam mit Phosphorverbindung, Siliziumverbindung, Titanverbindung, Borverbindung bzw. Aluminiumverbindung behandelt, wobei Bestandteile von Elektroden gewählt werden aus Kohlenstoff, einer Vorstufe für Kohlenstoff und polymerem Bindemittel. Man erhält dann ein Elektrodenmaterial, das modifiziertes Übergangsmetallmischoxid enthält.

In einer anderen Ausführungsform der vorliegenden Erfindung geht man so vor, dass man Vorstufe alleine mit Phosphorverbindung, Siliziumverbindung, Titanverbindung, Borverbindung bzw. Aluminiumverbindung behandelt, also in Abwesenheit von Kohlenstoff, einer Vorstufe für Kohlenstoff und polymerem Bindemittel. Man erhält dann ein modifiziertes Übergangsmetallmischoxid.

Modifiziertes Übergangsmetallmischoxid bzw. Elektrodenmaterial, das modifiziertes Übergangsmetallmischoxid enthält, fallen in der Regel in partikulärer Form an.

Nach dem erfindungsgemäßen Verfahren hergestellte Materialien sind sehr gut als oder zur Herstellung von Elektrodenmaterial geeignet. Sie haben nicht nur die positiven Eigenschaften der zugrunde liegenden Mischoxide, sondern sind auch sehr gut rieselfähig und lassen sich daher vorzüglich zu Elektroden verarbeiten.

Ohne sich auf eine Theorie festlegen zu wollen, kann man annehmen, dass Übergangsmetallmischoxid mit Bor oder Aluminium in der Oxidationsstufe +3 modifiziert sein kann, das heißt, dass Bor bzw. Aluminium im Kristallgitter Plätze von Übergangsmetall einnimmt, oder - gemäß einer anderen Variante - dass Bor oder Aluminium mit einem oder mehreren Metalle eine Verbindung gebildet hat.

In einer anderen Ausführungsform der vorliegenden Erfindung kann man - ohne Festlegung auf eine Theorie - annehmen, dass Übergangsmetallmischoxid mit Titan oder Silizium in der Oxidationsstufe +4 modifiziert sein kann, das heißt, dass Titan oder Silizium im Kristallgitter Plätze von Übergangsmetall einnimmt, oder - gemäß einer anderen Variante - dass Titan oder Silizium mit einem oder mehreren Metalle eine Verbindung gebildet hat.

In einer anderen Ausführungsform der vorliegenden Erfindung kann man - ohne Festlegung auf eine Theorie - annehmen, dass Übergangsmetallmischoxid mit Phosphor in der Oxidationsstufe +3 oder +5 modifiziert ist, das heißt, dass Phosphor im Kristallgitter Plätze von Übergangsmetall einnimmt, oder - gemäß einer anderen Variante - dass Phosphor mit einem oder mehreren Metalle eine Verbindung gebildet hat.

In einer Ausführungsform der vorliegenden Erfindung ist die Modifizierung mit Bor in der Oxidationsstufe +3 darüber hinaus so gleichmäßig, dass die Konzentration vorzugsweise um nicht mehr als ±20 mol-% abweicht, gemessen an der Oberfläche von Partikeln von Mischoxid, bevorzugt um nicht mehr als ±10 mol-%.

Das modifizierte Übergangsmetallmischoxid enthält neben Übergangsmetall auch Lithium als Kationen. Es enthält gleiche Molanteile an Lithiumionen wie Übergangsmetallionen oder einen Überschuss an Lithiumionen, bezogen auf Übergangsmetallionen, beispielsweise im Bereich von 0,1 bis 15 mol-%, bevorzugt 1 bis 10 mol-%.

Elemente wie Kalium und Natrium sind zumindest in Spuren ubiquitär. Im Rahmen der vorliegenden Erfindung sollen daher Anteile von Natrium oder Kalium im Bereich von 0,01 Gew.-% oder weniger nicht als Bestandteil von Übergangsmetallmischoxid betrachtet werden.

Die Elektrodenmaterialien sind sehr gut zu verarbeiten, beispielsweise aufgrund ihrer guten Rieselfähigkeit, und zeigen eine sehr gute Zyklenstabilität, wenn man elektrochemische Zellen herstellt unter Verwendung von erfindungsgemäßem modifiziertem Übergangsmetallmischoxid herstellt.

Das Elektrodenmaterial kann weiterhin Kohlenstoff in elektrisch leitfähiger Modifikation enthalten, beispielsweise als Ruß, Graphit, Graphen, Kohlenstoffnanoröhren oder Aktivkohle.

Das Elektrodenmaterial kann weiterhin mindestens ein Bindemittel enthalten, beispielsweise ein polymeres Bindemittel.

Geeignete Bindemittel sind vorzugsweise gewählt aus organischen (Co)polymeren. Geeignete (Co)polymere, also Homopolymere oder Copolymere, kann man beispielsweise wählen aus durch anionische, katalytische oder radikalische (Co)polymerisation erhältlichen (Co)polymeren, insbesondere aus Polyethylen, Polyacrylnitril, Polybutadien, Polystyrol, und Copolymeren von mindestens zwei Comonomeren, gewählt aus Ethylen, Propylen, Styrol, (Meth)acrylnitril und 1,3-Butadien. Außerdem ist Polypropylen geeignet. Weiterhin sind Polyisopren und Polyacrylate geeignet. Besonders bevorzugt ist Polyacrylnitril.

Unter Polyacrylnitril werden nicht nur Polyacrylnitril-Homopolymere verstanden, sondern auch Copolymere von Acrylnitril mit 1,3-Butadien oder Styrol. Bevorzugt sind Polyacrylnitril-Homopolymere.

Es wird unter Polyethylen nicht nur Homo-Polyethylen verstanden, sondern auch Copolymere des Ethylens, die mindestens 50 mol-% Ethylen einpolymerisiert enthalten und bis zu 50 mol-% von mindestens einem weiteren Comonomer, beispielsweise α-Olefine wie Propylen, Butylen (1-Buten), 1-Hexen, 1-Octen, 1-Decen, 1-Dodecen, 1-Penten, weiterhin Isobuten, Vinylaromaten wie beispielsweise Styrol, weiterhin (Meth)acrylsäure, Vinylacetat, Vinylpropionat, C₁-C₁₀-Alkylester der (Meth)acrylsäure, insbesondere Methylacrylat, Methylmethacrylat, Ethylacrylat, Ethylmethacrylat, n-Butylacrylat, 2-Ethylhexylacrylat, n-Butylmethacrylat, 2-Ethylhexylmethacrylat, weiterhin Maleinsäure, Maleinsäureanhydrid und Itaconsäureanhydrid. Bei Polyethylen kann es sich um HDPE oder um LDPE handeln.

Es wird unter Polypropylen nicht nur Homo-Polypropylen verstanden, sondern auch Copolymere des Propylens, die mindestens 50 mol-% Propylen einpolymerisiert enthalten und bis zu 50 mol-% von mindestens einem weiteren Comonomer, beispielsweise Ethylen und α-Olefine wie Butylen, 1-Hexen, 1-Octen, 1-Decen, 1-Dodecen und 1-Penten. Bei Polypropylen handelt es sich vorzugsweise um isotaktisches oder um im Wesentlichen isotaktisches Polypropylen.

Es werden unter Polystyrol nicht nur Homopolymere des Styrols verstanden, sondern auch Copolymere mit Acrylnitril, 1,3-Butadien, (Meth)acrylsäure, C₁-C₁₀-Alkylester der (Meth)acrylsäure, Divinylbenzol, insbesondere 1,3-Divinylbenzol, 1,2-Diphenylethylen und α-Methylstyrol.

Ein anderes bevorzugtes Bindemittel ist Polybutadien.

Andere geeignete Bindemittel sind gewählt aus Polyethylenoxid (PEO), Cellulose, Carboxymethylcellulose, Polyimiden und Polyvinylalkohol.

Man wählt das Bindemittel aus solchen (Co)polymeren, die ein mittleres Molekulargewicht M_{w} im Bereich von 50.000 bis 1.000.000 g/mol, bevorzugt bis 500.000 g/mol aufweisen.

Bei Bindemitteln kann es sich um vernetzte oder unvernetzte (Co)polymere handeln.

Man wählt das Bindemittel aus halogenierten (Co)polymeren, insbesondere aus fluorierten (Co)polymeren. Dabei werden unter halogenierten bzw. fluorierten (Co)polymeren solche (Co)polymere verstanden, die mindestens ein (Co)monomer einpolymerisiert enthalten, das mindestens ein Halogenatom bzw. mindestens ein Fluoratom pro Molekül aufweist, bevorzugt mindestens zwei Halogenatome bzw. mindestens zwei Fluoratome pro Molekül.

Beispiele sind Polyvinylchlorid, Polyvinylidenchlorid, Polytetrafluorethylen, Polyvinylidenfluorid (PVdF), Tetrafluoroethylen-Hexafluorpropylen-Copolymere, Vinylidenfluorid-HexafluorpropylenCopolymere (PVdF-HFP), Vinylidenfluorid-Tetrafluorethylen-Copolymere, Perfluoralkylvinylether-Copolymere, Ethylen-Tetrafluorethylen-Copolymere, Vinylidenfluorid-ChlortrifluorethylenCopolymere und Ethylen-Chlorfluorethylen-Copolymere.

Geeignete Bindemittel sind insbesondere Polyvinylalkohol und halogenierte (Co)polymere, beispielsweise Polyvinylchlorid oder Polyvinylidenchlorid, insbesondere fluorierte (Co)polymere wie Polyvinylfluorid und insbesondere Polyvinylidenfluorid und Polytetrafluorethylen.

Elektrisch leitfähiges, kohlenstoffhaltiges Material kann man beispielsweise aus Graphit, Ruß, Kohlenstoffnanoröhren, Graphen oder Mischungen von mindestens zwei der vorstehend genannten Stoffen wählen. Im Rahmen der vorliegenden Erfindung kann elektrisch leitfähiges, kohlenstoffhaltiges Material auch kurz als Kohlenstoff (B) bezeichnet werden.

Es handelt sich bei elektrisch leitfähigem, kohlenstoffhaltigem Material um Ruß. Ruß kann beispielsweise gewählt werden aus Lampenruß, Ofenruß, Flammruß, Thermalruß, Acetylenruß, Industrieruß und Furnace Ruß. Ruß kann Verunreinigungen enthalten, beispielsweise Kohlenwasserstoffe, insbesondere aromatische Kohlenwasserstoffe, oder Sauerstoff-haltige Verbindungen bzw. Sauerstoff-haltige Gruppen wie beispielsweise OH-Gruppen. Weiterhin sind Schwefel- oder Eisen-haltige Verunreinigungen in Ruß möglich.

In einer Variante handelt es sich bei elektrisch leitfähigem, kohlenstoffhaltigem Material um partiell oxidierten Ruß.

In einer Ausführungsform handelt es sich bei elektrisch leitfähigem, kohlenstoffhaltigem Material um Kohlenstoffnanoröhren (englisch carbon nanotubes). Kohlenstoffnanoröhren (Kohlenstoffnanoröhren, kurz CNT oder englisch Carbon nanotubes), beispielsweise einwandige Kohlenstoffnanoröhren (englisch single-walled carbon nanotubes, SW CNT) und bevorzugt mehrwandige Kohlenstoffnanoröhren (englisch multi-walled carbon nanotubes, MW CNT), sind an sich bekannt. Ein Verfahren zu ihrer Herstellung und einige Eigenschaften werden beispielsweise von A. Jess et al. in Chemie Ingenieur Technik 2006, 78, 94 - 100 beschrieben.

In einer Ausführungsform haben Kohlenstoffnanoröhren einen Durchmesser im Bereich von 0,4 bis 50 nm, bevorzugt 1 bis 25 nm.

In einer Ausführungsform haben Kohlenstoffnanoröhren eine Länge im Bereich von 10 nm bis 1 mm, bevorzugt 100 nm bis 500 nm.

Kohlenstoffnanoröhren kann man nach an sich bekannten Verfahren herstellen. Beispielsweise kann man eine flüchtige Kohlenstoff-haltige Verbindung wie beispielsweise Methan oder Kohlenmonoxid, Acetylen oder Ethylen, oder ein Gemisch von flüchtigen Kohlenstoff-haltigen Verbindungen wie beispielsweise Synthesegas in Gegenwart von einem oder mehreren Reduktionsmitteln wie beispielsweise Wasserstoff und/oder einem weiteren Gas wie beispielsweise Stickstoff zersetzen. Ein anderes geeignetes Gasgemisch ist eine Mischung von Kohlenmonoxid mit Ethylen. Geeignete Temperaturen zur Zersetzung liegen beispielsweise im Bereich von 400 bis 1000°C, bevorzugt 500 bis 800°C. Geeignete Druckbedingungen für die Zersetzung sind beispielsweise im Bereich von Normaldruck bis 100 bar, bevorzugt bis 10 bar.

Ein- oder mehrwandige Kohlenstoffnanoröhren kann man beispielsweise durch Zersetzung von Kohlenstoff-haltigen Verbindungen im Lichtbogen erhalten, und zwar in Anwesenheit bzw. Abwesenheit eines Zersetzungskatalysators.

In einer Ausführungsform führt man die Zersetzung von flüchtiger Kohlenstoff-haltiger Verbindung bzw. Kohlenstoff-haltigen Verbindungen in Gegenwart eines Zersetzungskatalysators durch, beispielsweise Fe, Co oder bevorzugt Ni.

Unter Graphen werden fast ideal oder ideal zweidimensionale hexagonale Kohlenstoffkristalle verstanden, die analog zu einzelnen Graphitschichten aufgebaut sind.

Das Gewichtsverhältnis von modifiziertem Übergangsmetallmischoxid und elektrisch leitfähigem, kohlenstoffhaltigem Material liegt im Bereich von im Bereich von 200:1 bis 5:1, bevorzugt 100:1 bis 10:1.

Eine Elektrode enthält mindestens ein Übergangsmetallmischoxid, mindestens ein elektrisch leitfähiges, kohlenstoffhaltiges Material und mindestens ein Bindemittel.

Übergangsmetallmischoxid und elektrisch leitfähiges, kohlenstoffhaltiges Material sind vorstehend beschrieben.

Das Elektrodenmaterial enthält:
im Bereich von 60 bis 98 Gew.-%, bevorzugt 70 bis 96 Gew.-% modifiziertes Übergangsmetallmischoxid,
im Bereich von 1 bis 20 Gew.-%, bevorzugt 2 bis 15 Gew.-% Bindemittel,
im Bereich von 1 bis 25 Gew.-% bevorzugt 2 bis 20 Gew.-% elektrisch leitfähiges, kohlenstoffhaltiges Material.

Die Geometrie von Elektroden kann man in weiten Grenzen wählen. Bevorzugt ist es, Elektroden in dünnen Filmen auszugestalten, beispielsweise in Filmen mit einer Dicke im Bereich von 10 µm bis 250 µm, bevorzugt 20 bis 130 µm.

Es umfassen eine Folie, beispielsweise eine Metallfolie, insbesondere eine Aluminiumfolie, oder eine Polymerfolie, beispielsweise eine Polyesterfolie, die unbehandelt oder silikonisiert sein kann.

Elektroden dienen in elektrochemischen Zellen definitionsgemäß als Kathoden. Elektrochemische Zellen enthalten eine Gegenelektrode, die im Rahmen der vorliegenden Erfindung als Anode definiert wird und die beispielsweise eine Kohlenstoff-Anode, insbesondere eine Graphit-Anode, eine Lithium-Anode, eine Silizium-Anode oder eine Lithium-Titanat-Anode sein kann.

Bei elektrochemischen Zellen kann es sich beispielsweise um Batterien oder um Akkumulatoren handeln.

Elektrochemische Zellen können neben Anode und Elektrode weitere Bestandteile umfassen, beispielsweise Leitsalz, nicht-wässriges Lösungsmittel, Separator, Stromableiter, beispielsweise aus einem Metall oder einer Legierung, weiterhin Kabelverbindungen und Gehäuse.

Sie enthalten mindestens ein nicht-wässriges Lösungsmittel, das bei Zimmertemperatur flüssig oder fest sein kann, bevorzugt gewählt aus Polymeren, cyclischen oder nicht-cyclischen Ethern, cyclischen und nicht-cyclischen Acetalen und cyclischen oder nicht cyclischen organischen Carbonaten.

Beispiele für geeignete Polymere sind insbesondere Polyalkylenglykole, bevorzugt Poly-C₁-C₄-alkylenglykole und insbesondere Polyethylenglykole. Dabei können Polyethylenglykole bis zu 20 mol-% ein oder mehrere C₁-C₄-Alkylenglykole einpolymerisiert enthalten. Vorzugsweise händelt es sich bei Polyalkylenglykolen um zweifach mit Methyl oder Ethyl verkappte Polyalkylenglykole.

Das Molekulargewicht M_{w} von geeigneten Polyalkylenglykolen und insbesondere von geeigneten Polyethylenglykolen kann mindestens 400 g/mol betragen.

Das Molekulargewicht M_{w} von geeigneten Polyalkylenglykolen und insbesondere von geeigneten Polyethylenglykolen kann bis zu 5.000.000 g/mol betragen, bevorzugt bis zu 2.000.000 g/mol betragen

Beispiele für geeignete nicht-cyclische Ether sind beispielsweise Diisopropylether, Di-n-Butylether, 1,2-Dimethoxyethan, 1,2-Diethoxyethan, bevorzugt ist 1,2-Dimethoxyethan.

Beispiele für geeignete cyclische Ether sind Tetrahydrofuran und 1,4-Dioxan.

Beispiele für geeignete nicht-cyclische Acetale sind beispielsweise Dimethoxymethan, Diethoxymethan, 1,1-Dimethoxyethan und 1,1-Diethoxyethan.

Beispiele für geeignete cyclische Acetale sind 1,3-Dioxan und insbesondere 1,3-Dioxolan.

Beispiele für geeignete nicht-cyclische organische Carbonate sind Dimethylcarbonat, Ethylmethylcarbonat und Diethylcarbonat.

Beispiele für geeignete cyclische organische Carbonate sind Verbindungen der allgemeinen Formeln (I) und (II) 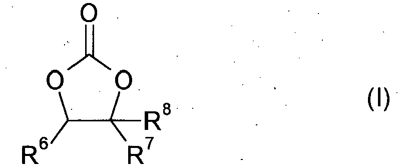 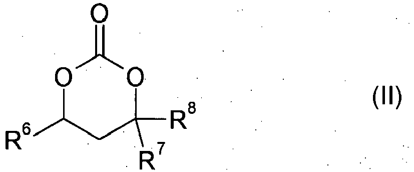 bei denen R⁶, R⁷ und R⁸ gleich oder verschieden sein können und gewählt aus Wasserstoff und C₁-C₄-Alkyl, beispielsweise Methyl, Ethyl, n-Propyl, iso-Propyl, n-Butyl, iso-Butyl, sec.-Butyl und tert.-Butyl, wobei vorzugsweise R⁷ und R⁸ nicht beide tert.-Butyl sind.

In besonders bevorzugten Ausführungsformen ist R⁶ Methyl und R⁷ und R⁸ sind jeweils Wasserstoff, oder R⁶, R⁷ und R⁸ sind jeweils gleich Wasserstoff.

Ein anderes bevorzugtes cyclisches organisches Carbonat ist Vinylencarbonat, Formel (III).

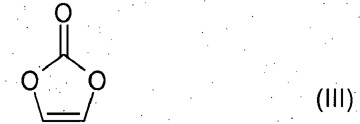

Vorzugsweise setzt man das oder die Lösungsmittel im so genannten wasserfreien Zustand ein, d.h. mit einem Wassergehalt im Bereich von 1 ppm bis 0,1 Gew.-%, bestimmbar beispielsweise durch Karl-Fischer-Titration.

Elektrochemische Zellen enthalten weiterhin mindestens ein Leitsalz. Geeignete Leitsalze sind insbesondere Lithiumsalze. Beispiele für geeignete Lithiumsalze sind LiPF₆, LiBF₄, LiClO₄, LiAsF₆, LiCF₃SO₃, LiC(CₙF₂ₙ₊₁SO₂)₃, Lithiumimide wie LiN(CₙF₂ₙ₊₁SO₂)₂, wobei n eine ganze Zahl im Bereich von 1 bis 20 ist, LiN(SO₂F)₂, Li₂SiF₆, LiSbF₆, LiAlCl₄, und Salze der allgemeinen Formel (CₙF₂ₙ₊₁SO₂)ₜYLi, wobei m wie folgt definiert ist:
t = 1, wenn Y gewählt wird aus Sauerstoff und Schwefel,
t = 2, wenn Y gewählt wird aus Stickstoff und Phosphor, und
t = 3, wenn Y gewählt wird aus Kohlenstoff und Silizium.

Bevorzugte Leitsalze sind gewählt aus LiC(CF₃SO₂)₃, LiN(CF₃SO₂)₂, LiPF₆, LiBF₄, LiClO₄, und besonders bevorzugt sind LiPF₆ und LiN(CF₃SO₂)₂.

Elektrochemische Zellen enthalten einen oder mehrere Separatoren, durch die die Elektroden mechanisch getrennt sind. Als Separatoren sind Polymerfilme, insbesondere poröse Polymerfilme, geeignet, die gegenüber metallischem Lithium unreaktiv sind. Besonders geeignete Materialien für Separatoren sind Polyolefine, insbesondere filmförmiges poröses Polyethylen und filmförmiges poröses Polypropylen.

Separatoren aus Polyolefin, insbesondere aus Polyethylen oder Polypropylen, können eine Porosität im Bereich von 35 bis 45% haben. Geeignete Porendurchmesser liegen beispielsweise im Bereich von 30 bis 500 nm.

Man kann Separatoren aus mit anorganischen Partikeln gefüllten PET-Vliesen wählen. Derartige Separatoren können eine Porosität im Bereich von 40 bis 55 % aufweisen. Geeignete Porendurchmesser liegen beispielsweise im Bereich von 80 bis 750 nm.

Elektrochemische Zellen enthalten weiterhin ein Gehäuse, das beliebige Form haben kann, beispielsweise quaderförmig oder die Form einer zylindrischen Scheibe. In einer Variante wird als Gehäuse eine als Beutel ausgearbeitete Metallfolie eingesetzt.

Elektrochemische Zellen liefern eine hohe Spannung und zeichnen sich aus durch eine hohe Energiedichte und gute Stabilität aus.

Elektrochemische Zellen lassen sich miteinander kombinieren, beispielsweise in Reihenschaltung oder in Parallelschaltung. Reihenschaltung ist bevorzugt.

Die Verwendung von elektrochemischen Zellen in Geräten, insbesondere in mobilen Geräten ist beschrieben. Beispiele für mobile Geräte sind Fahrzeuge, beispielsweise Automobile, Zweiräder, Flugzeuge oder Wasserfahrzeuge wie Boote oder Schiffe. Andere Beispiele für mobile Geräte sind solche, die man selber bewegt, beispielsweise Computer, insbesondere Laptops, Telefone oder elektrische Handwerkszeuge, beispielsweise aus dem Bereich des Bauens, insbesondere Bohrmaschinen, Akkubohrschrauber oder Akku-Tacker.

Die Verwendung von elektrochemischen Zellen in Geräten bietet den Vorteil einer längeren Laufzeit vor dem Nachladen. Wollte man mit elektrochemischen Zellen mit geringerer Energiedichte eine gleiche Laufzeit verwirklichen, so müsste man ein höheres Gewicht für elektrochemische Zellen in Kauf nehmen.

Die Erfindung wird durch Arbeitsbeispiele erläutert.

Allgemeine Bemerkung: NI steht für Normliter. Angaben in sind Gew.-%, wenn nicht ausdrücklich anders angegeben.

### I. Herstellung von erfindungsgemäß modifizierten Vorstufen und Weiterverarbeitung zu Übergangsmetallmischoxiden

### I.1 Herstellung der erfindungsgemäß modifizierten Vorstufe eines Übergangsmetallmischoxids MVS-ÜM.1 und Weiterverarbeitung

Man suspendiert 100 g Ni_{0.26}Mn_{0,75}(OH)₂ in 100 g Triethylborat B(OC₂H₅)₃ (B-1). Die so erhaltene Suspension wird eine Stunde lang bei 60°C unter Stickstoff gerührt. Anschließend wird die Suspension über eine Glasfritte filtriert. Man erhält eine erfindungsgemäß modifizierte Vorstufe MVS-ÜM.1.

Die so erhältliche modifizierte Vorstufe wird anschließend mit Li₂CO₃ gemischt (Molverhältnis Li : Ni : Mn wie 0,5 : 0,25 : 0,75) und in einem Muffelofen bei 850°C für 12 Stunden kalziniert. Dadurch wird ein erfindungsgemäßes modifiziertes Übergangsmetallmischoxid mit Spinellstruktur aus der modifizierten Vorstufe erhalten.

### 1.2 Herstellung der erfindungsgemäß modifizierten Vorstufe eines Übergangsmetallmischoxids MVS-ÜM.3 und Weiterverarbeitung

### Behandlung mit in-situ erzeugtem AlF₃:

100 g einer Vorstufe Ni_{0,33}Co_{0,33}Mn_{0,33}(OH)₂ wird in 1000 g Wasser suspendiert und bei 50°C gerührt. Anschließend werden nacheinander 10 Gew.-%, wässrige Lösungen von

Aluminiumnitrat und Ammoniumfluorid zugegeben, so dass das Molverhältnis von Al:F:Ni:Co:Mn 0,01:0,03:0,33:0,33:0,33 beträgt Anschließend wird die Suspension für 2 h bei 50°C gerührt und danach abfiltriert und bei 100°C getrocknet. Man erhält die mit AlF₃ erfindungsgemäß modifizierte Vorstufe MVS-ÜM.3.

Die so modifizierte Vorstufe wird anschließend mit Li₂CO₃ im Molverhältnis 1:0,55 gemischt und in einem Muffelofen bei 850°C für 12 h calciniert. Dadurch wird ein modifiziertes Übergangsmetallmischoxid mit Schichtstruktur erhalten.

### II. Allgemeine Vorschrift zur Herstellung von Elektroden und Testzellen

### Eingesetzte Materialien:

### Elektrisch leitfähige, kohlenstoffhaltige Materialien:

Kohlenstoff (C-1): Ruß, BET-Oberfläche von 62 m²/g, kommerziell erhältlich als "Super P Li" der Firma Timcal

Bindemittel (BM.1): Copolymer von Vinylidenfluorid und Hexafluorpropen, als Pulver, kommerziell erhältlich als Kynar Flex® 2801 der Fa. Arkema, Inc.

Angaben in % beziehen sich auf Gewichtsprozent, wenn nicht ausdrücklich anders angegeben.

Zur Bestimmung der elektrochemischen Daten der Materialien werden 8 g modifiziertes Übergangsmetallmischoxid aus Beispiel I.1, 1 g Kohlenstoff (C-1) und 1 g (BM.1) unter Zusatz von 24 g N-Methylpyrrolidon (NMP) zu einer Paste vermischt. Man beschichtet eine 30 µm dicke Aluminiumfolie mit der vorstehend beschriebenen Paste (Aktivmaterialbeladung 5-7 mg/cm²). Nach Trocknung bei 105°C werden kreisförmige Teile der so beschichteten

Aluminiumfolie (Durchmesser 20 mm) ausgestanzt. Aus den so erhältlichen Elektroden stellt man elektrochemische Zellen her.

Nach Trocknung bei 105°C werden kreisförmige Elektroden (Durchmesser 20 mm) ausgestanzt und zu Testzellen verbaut. Als Elektrolyt wird eine 1 mol/l Lösung von LiPF₆ in Ethylencarbonat/Dimethylcarbonat (1:1 bezogen auf Massenanteile) eingesetzt. Die Anode der Testzellen besteht aus einer Lithiumfolie, die über einen Separator aus Glasfaserpapier zur Kathodenfolie in Kontakt steht.

Man erhält elektrochemische Zellen EZ.1.

Die elektrochemischen Zellen werden zwischen 4.9 V und 3.5 V bei 25°C in 100 Zyklen zyklisiert (geladen/entladen). Die Lade- und Entladeströme betragen 150 mA/g Kathodenmaterial. Die Erhaltung der Entladekapazität nach 100 Zyklen wird bestimmt.

Die elektrochemische Zellen zeigen einen Vorteil in der Zyklenstabilität.

## Patentansprüche

1. Verfahren zur Herstellung von modifizierten Übergangsmetallmischoxiden, **dadurch gekennzeichnet, dass** man eine Vorstufe eines Übergangsmetallmischoxids, das Lithium und mindestens zwei Übergangsmetalle, gewählt aus Kombinationen von mindestens zwei der Elemente Nickel, Kobalt, Titan, Vanadium, Chrom, Mangan und Eisen, als Kationen enthält, mit mindestens einem Stoff behandelt, der gewählt wird aus Verbindungen von Phosphor, Silizium, Titan, Bor oder Aluminium mit mindestens einer Phenoxy-, Alkoxygruppe oder mindestens einem Halogen pro Mol, wobei die Vorstufe keine Lithiumkationen enthält und wobei man die Behandlung vor der Umsetzung der Vorstufe mit mindestens einer Lithiumverbindung durchführt, die gewählt wird aus LiOH, Li₂CO₃, Li₂O und LiNO₃.

2. Verfahren nach Anspruch 1, **dadurch gekennzeichnet, dass** man die Behandlung bei Temperaturen im Bereich von -20 bis +1200°C durchführt.

3. Verfahren nach einem der Ansprüche 1 bis 2, **dadurch gekennzeichnet, dass** man Verbindungen von Bor wählt aus Verbindungen der Formel B(X¹)ₐ(R²)₃₋ₐ, wobei die Variablen wie folgt definiert sind:
X¹ sind gleich oder verschieden und gewählt aus Fluor, Chlor, Brom, Iod und O-C₁-C₆-Alkyl, cyclisch oder linear,
R² sind gleich oder verschieden und gewählt aus Phenyl und C₁-C₆-Alkyl, und
a ist eine Zahl im Bereich von eins bis drei.

4. Verfahren nach einem der Ansprüche 1 bis 2, **dadurch gekennzeichnet, dass** man Verbindungen von Titan wählt aus Verbindungen der Formel Ti(R²)ₘ(X¹)₄₋ₘ, wobei die Variablen wie folgt definiert sind:
R² sind gleich oder verschieden und gewählt aus Phenyl und C₁-C₆-Alkyl,
X¹ sind gleich oder verschieden und gewählt aus Fluor, Chlor, Brom, Iod und O-C₁-C₆-Alkyl, cyclisch oder linear,
m ist eine Zahl im Bereich von null bis drei.

5. Verfahren nach einem der Ansprüche 1 bis 2, **dadurch gekennzeichnet, dass** man Verbindungen von Silizium wählt aus Verbindungen der Formel Si(R²)ₘ(X¹)₄₋ₘ, wobei die Variablen wie folgt definiert sind:
R² sind gleich oder verschieden und gewählt aus Phenyl und C₁-C₆-Alkyl,
X¹ sind gleich oder verschieden und gewählt aus Fluor, Chlor, Brom, Iod und O-C₁-C₆-Alkyl, cyclisch oder linear,
m ist eine Zahl im Bereich von null bis drei.

6. Verfahren nach einem der Ansprüche 1 bis 3, **dadurch gekennzeichnet, dass** man Verbindungen von Phosphor wählt aus Verbindungen der Formel O=P(OR³)₃ und R⁵-P(O)(OR³)(OR⁴), wobei die Variablen wie folgt definiert sind:
R³, R⁴ gleich oder verschieden und gewählt aus Wasserstoff, Phenyl und C₁-C₄-Akyl,
R⁵ gewählt aus Wasserstoff, Phenyl, C₃-C₇-Cycloalkyl und C₁-C₆-Alkyl, cyclisch oder linear.

7. Verfahren nach einem der Ansprüche 1 bis 6, **dadurch gekennzeichnet, dass** man als Vorstufe eines Mischoxids eine Mischung von Hydroxiden, Phosphaten, Carbonaten, Oxyhydroxiden oder Oxiden von mindestens zwei Elementen, gewählt aus Kombinationen von mindestens zwei der Elemente Nickel, Kobalt, Titan, Vanadium, Chrom, Mangan und Elsen, wählt.

8. Verfahren nach einem der Ansprüche 1 bis 7, **dadurch gekennzeichnet, dass** man eine Vorstufe eines Mischoxids, das Lithium und mindestens zwei Übergangsmetalle als Kationen enthält, einer Gasatmosphäre aussetzt, die Stickstoff oder Sauerstoff und mindestens einen gasförmige Stoff enthält, der gewählt wird aus Verbindungen von Phosphor, Silizium, Titan, Bor oder Aluminium mit mindestens einer Alkoxygruppe oder mindestens einem Halogen.

## Claims

1. A process for preparing modified mixed transition metal oxides, which comprises treating a precursor of a mixed transition metal oxide which comprises lithium and at least two transition metals selected from combinations of at least two of the elements nickel, cobalt, titanium, vanadium, chromium, manganese and iron as cations with at least one substance which is selected from compounds of phosphorus, silicon, titanium, boron or aluminum having at least one phenoxy or alkoxy group or at least one halogen per mole, the precursor comprising no lithium cations and the treatment being performed before the reaction of the precursor with at least one lithium compound which is selected from LiOH, Li₂CO₃, Li₂O and LiNO₃.

2. The process according to claim 1, wherein the treatment is performed at temperatures in the range from -20 to +1200°C.

3. The process according to either of claims 1 and 2, wherein compounds of boron are selected from compounds of the formula B(X¹)ₐ(R²)₃₋ₐ, where the variables are each defined as follows:
X¹ are the same or different and are each selected from fluorine, chlorine, bromine, iodine and O-C₁-C₆-alkyl, cyclic or linear,
R² are the same or different and are each selected from phenyl and C₁-C₆-alkyl, and
a is in the range from one to three.

4. The process according to either of claims 1 and 2, wherein compounds of titanium are selected from compounds of the formula Ti(R²)ₘ(X¹)₄₋ₘ, where the variables are each defined as follows:
R² are the same or different and are each selected from phenyl and C₁-C₆-alkyl,
X¹ are the same or different and are each selected from fluorine, chlorine, bromine, iodine and O-C₁-C₆-alkyl, cyclic or linear,
m is in the range from zero to three.

5. The process according to either of claims 1 and 2, wherein compounds of silicon are selected from compounds of the formula Si(R²)ₘ(X¹)₄₋ₘ, where the variables are each defined as follows:
R² are the same or different and are each selected from phenyl and C₁-C₆-alkyl,
X¹ are the same or different and are each selected from fluorine, chlorine, bromine, iodine and O-C₁-C₆-alkyl, cyclic or linear,
m is in the range from zero to three.

6. The process according to any of claims 1 to 3, wherein compounds of phosphorus are selected from compounds of the formula O=P(OR³)₃ and R⁵-P(O)(OR³)(OR⁴), where the variables are each defined as follows:
R³, R⁴ are the same or different and are each selected from hydrogen, phenyl and C₁-C₄-alkyl,
R⁵ is selected from hydrogen, phenyl, C₃-C₇-cycloalkyl and C₁-C₆-alkyl, cyclic or linear.

7. The process according to any of claims 1 to 6, wherein the precursor selected for a mixed oxide is a mixture of hydroxides, phosphates, carbonates, oxyhydroxides or oxides of at least two elements selected from combinations of at least two of the elements nickel, cobalt, titanium, vanadium, chromium, manganese and iron.

8. The process according to any of claims 1 to 7, wherein a precursor of a mixed oxide which comprises lithium and at least two transition metals as cations is exposed to a gas atmosphere which comprises nitrogen or oxygen and at least one gaseous substance which is selected from compounds of phosphorus, silicon, titanium, boron or aluminum having at least one alkoxy group or at least one halogen.

## Revendications

1. Procédé pour la préparation d'oxydes mixtes modifiés de métaux de transition, **caractérisé en ce qu'**on traite un précurseur d'un oxyde mixte de métal de transition qui contient comme cations du lithium et au moins deux métaux de transition, choisis parmi des associations d'au moins deux des éléments nickel, cobalt, titane, vanadium, chrome, manganèse et fer, par au moins une substance qui est choisie parmi des composés de phosphore, silicium, titane, bore ou aluminium, comportant au moins un groupe phénoxy, alcoxy ou au moins un halogène par molécule, le précurseur ne contenant pas de cations lithium et en effectuant le traitement avant la réaction du précurseur avec au moins un composé de lithium, qui est choisi parmi LiOH, Li₂CO₃, Li₂O et LiNO₃.

2. Procédé selon la revendication 1, **caractérisé en ce qu'**on effectue le traitement à des températures dans la plage de -20 à +1200 °C.

3. Procédé selon l'une quelconque des revendications 1 et 2, **caractérisé en ce qu'**on choisit les composés de bore parmi des composés de formule B(X¹)ₐ(R²)₃₋ₐ, dans laquelle les variables sont définies comme suit :
X¹ sont les mêmes ou différents et choisis parmi le fluor, le chlore, le brome, l'iode et un groupe O-alkyle(C₁-C₆) cyclique ou linéaire,
R² sont les mêmes ou différents et choisis parmi les groupes phényle et alkyle en C₁-C₆, et
a est un nombre dans la plage de un à trois.

4. Procédé selon l'une quelconque des revendications 1 et 2, **caractérisé en ce qu'**on choisit les composés de titane parmi des composés de formule Ti(R²)ₘ(X¹)₄₋ₘ, dans laquelle les variables sont définies comme suit :
R² sont les mêmes ou différents et choisis parmi les groupes phényle et alkyle en C₁-C₆,
X¹ sont les mêmes ou différents et choisis parmi le fluor, le chlore, le brome, l'iode et un groupe O-alkyle(C₁-C₆) cyclique ou linéaire,
m est un nombre dans la plage de zéro à trois.

5. Procédé selon l'une quelconque des revendications 1 et 2, **caractérisé en ce qu'**on choisit les composés de silicium parmi des composés de formule Si(R²)ₘ(X¹)₄₋ₘ, dans laquelle les variables sont définies comme suit :
R² sont les mêmes ou différents et choisis parmi les groupes phényle et alkyle en C₁-C₆,
X¹ sont les mêmes ou différents et choisis parmi le fluor, le chlore, le brome, l'iode et un groupe O-alkyle(C₁-C₆) cyclique ou linéaire,
m est un nombre dans la plage de zéro à trois.

6. Procédé selon l'une quelconque des revendications 1 à 3, **caractérisé en ce qu'**on choisit les composés de phosphore parmi des composés de formules O=P(OR³)₃ et R⁵-P(O)(OR³)(OR⁴), dans lesquelles les variables sont définies comme suit :
R³, R⁴ sont identiques ou différents et choisis parmi un atome d'hydrogène, les groupes phényle et alkyle en C₁-C₄,
R⁵ est choisi parmi un atome d'hydrogène, les groupes phényle, cycloalkyle en C₃-C₇ et alkyle en C₁-C₆ cyclique ou linéaire.

7. Procédé selon l'une quelconque des revendications 1 à 6, **caractérisé en ce qu'**on choisit comme précurseur d'un oxyde mixte un mélange d'hydroxydes, phosphates, carbonates, oxyhydroxydes ou oxydes d'au moins deux éléments, choisis parmi des associations d'au moins deux des éléments nickel, cobalt, titane, vanadium, chrome, manganèse et fer.

8. Procédé selon l'une quelconque des revendications 1 à 7, **caractérisé en ce qu'**on expose un précurseur d'un oxyde mixte qui contient comme cations du lithium et au moins deux métaux de transition, à une atmosphère gazeuse qui contient de l'azote ou de l'oxygène et au moins une substance gazeuse qui est choisie parmi des composés de phosphore, silicium, titane, bore ou aluminium, comportant au moins un groupe alcoxy ou au moins un atome d'halogène.
